# EUROPÄISCHE PATENTSCHRIFT

(11) **EP 0 635 296 B1**
(45) Veröffentlichungstag und Bekanntmachung des Hinweises auf die Patenterteilung: **26.08.1998**
(21) Anmeldenummer: 94109937.6
(22) Anmeldetag: 28.06.1994
(51) Int. Cl.: B01D 29/15, B01D 35/147, B01D 29/54, B01D 35/153

(54) **Flüssigkeitsfilter**
Filter for liquids
Filtre pour liquides

(30) Priorität: 09.07.1993 DE 4322894
(43) Veröffentlichungstag der Anmeldung: 25.01.1995
(73) Patentinhaber: FILTERWERK MANN & HUMMEL GMBH, 71631 Ludwigsburg (DE)
(72) Erfinder: Gerber, Manfred, D-71732 Tamm (DE); Wendt, Heinz, D-71642 Ludwigsburg (DE)
(74) Vertreter: Voth, Gerhard, Dipl.-Ing.

(56) Entgegenhaltungen:
- EP-A- 0 405 447
- WO-A-92/17262
- DE-A- 3 103 723
- DE-A- 3 933 794
- DE-A- 4 017 500
- US-A- 3 056 503
- US-A- 3 487 929

## Beschreibung

Die Erfindung betrifft ein Flüssigkeitsfilter mit einem öffenbaren Filtergehäuse, einem Rohflüssigkeitszulauf, einem Reinflüssigkeitsablauf, einem in dem Filtergehäuse angeordnete Filterelement, welches im wesentlichen hohlzylinderförmig ausgestaltet ist und von außen nach innen durchströmt ist und wobei ein weiteres Filterelement vorgesehen ist.

Aus der DE-A-825 537 ist ein Filter bekannt, welches zur Filtrierung von Flüssigkeiten geeignet ist und im wesentlichen zwei Filterelemente aufweist. Die zu reinigende Flüssigkeit strömt in den konzentrischen Zwischenraum zwischen diesen beiden Filterelementen ein, strömt durch die beiden Filterelemente durch und verläßt diese im Kernbereich des Filterelements und am äußeren Umfang. Das bekannte Filter ist als ein Spaltfilter ausgestaltet, wobei verschiedene Spaltformen gewählt werden können.

Ein Nachteil dieses Filters ist darin zu sehen, daß die gereinigte Flüssigkeit sowohl innen als auch außen aus den Filterelementen austritt und das Zusammenführen der Flüssigkeitsströme erschwert. Selbstverständlich besteht auch die Möglichkeit, die Strömungsrichtung umzukehren. Allerdings ist dann die Zuführung der Rohflüssigkeit problematisch.

Es ist ferner aus der EP-A-0 405 447 ein Flüssigkeitsfilter bekannt, welches ein erstes und ein zweites Filterelement aufweist. Die Filterelemente sind in Reihe geschaltet, d. h. zunächst durchströmt die Flüssigkeit ein erstes Grobfilterelement, anschließend ein zweites Feinfilterelement.

Ein Nachteil des Flüssigkeitsfilters besteht darin, daß die Filterelemente einen hohen Platzbedarf erfordern.

Aus der US-A-3 056 503 ist eine Filtereinrichtung bekannt, die zwischen einem Ober- und einem Unterteil ein axial durchströmtes Filterelement aufweist. Auch dieses Filterelement beansprucht einen großen Bauraum.

Die US-A-3 487 929 beschreibt ein Filtersystem, welches mit zwei koaxial hintereinander liegenden Filterelementen ausgestattet ist. Ein Nachteil bei diesem System besteht darin, daß ein Austausch der Filterelemente das Entfernen bzw. Öffnen mehrerer Bauteile erfordert. Damit wird die Demontage und Montage der Filterelemente unnötig erschwert.

Aus der DE-A 31 03 723 ist ein Filter für Flüssigkeiten bekannt, bei dem zwei Tiefenfilterröhren zueinander parallel geschaltet sind. Zwischen beiden Tiefenfilterröhren liegt ein einteiliger Abstandshalter, der Ablaufkanäle und Zulaufkanäle für die Tiefenfilterröhren bildet. Die beiden Tiefenfilterröhren werden axial in einem Gehäuse eingespannt. Die Abdichtung erfolgt über radiale Dichtungselemente. Ein Nachteil dieses Systems besteht darin, daß aufgrund der axialen Einspannung Längentoleranzen dazu führen können, daß Dichtheitsprobleme auftreten.

Aus der WO 92/17262 ist ein Flüssigkeitsfilter mit einem trennbaren Filtergehäuse bekannt. Ein Nachteil dieses Flüssigkeitsfilters besteht darin, daß aufgrund zusätzlicher Ventile das Mittelrohr einen großen Durchmesser aufweist und damit unnötig viel Bauraum erfordert. Dies verringert die filterwirksame Fläche des Filterelements erheblich.

Der Erfindung liegt die Aufgabe zugrunde, die genannten Nachteile zu vermeiden und ein Flüssigkeitsfilter zu bilden, wobei die Filtereinheit einfach zu montieren bzw. demontieren ist und wobei der Aufbau längentoleranz-unempfindlich ist.

Diese Aufgabe wird ausgehend von dem Oberbegriff des unabhängigen Patentanspruchs durch dessen kennzeichnenden Merkmale gelöst.

Ein wesentlicher Vorteil der Erfindung ist die Schaffung eines Flüssigkeitsfilters, bei dem grundsätzlich die Schmutzablagerung an der Außenseite jedes Filterelements erfolgt und bei dem die gereinigte Flüssigkeit in einfacher weise gemeinsam einem Reinflüssigkeitsablauf, der sich im Inneren der beiden Filterelemente befindet, zugeführt werden kann.

Eine vorteilhafte Ausgestaltung der Erfindung besteht darin, das zweite Filterelement mit einem Umgehungskanal zu versehen. Dieser Umgehungskanal ist beispielsweise dadurch verwirklichbar, daß das zweite Filterelement eine verringerte Länge besitzt und damit ein Ringspalt an dessen unteren bzw. oberen Stirnkanten entsteht.

Das Mittelrohr, durch welches die gereinigte Flüssigkeit geleitet wird, ist gleichzeitig Stützrohr für das Filterelement und hat im Bereich der Stirnseiten des Filterelements Abdichtwirkung zwischen Rohflüssigkeits- und Reinflüssigkeitsseite.

Gemäß einer Weiterbildung der Erfindung bilden beide Filterelemente eine Einheit und sind mit stirnseitigen Endscheiben versehen. Jede Endscheibe ist an ihrer Mittelbohrung mit einer Radialdichtung bestückt. Diese Radialdichtung liegt im montierten Zustand an dem Mittelrohr an.

Nach einer weiteren vorteilhaften Ausgestaltung der Erfindung können die Filterelemente, welche aus einem Filtermittel, Endscheiben sowie einem Trennrohr bestehen, lösbar miteinander verbunden sein. Dadurch ist ein Recycling der einzelnen Elemente bzw. Materialbestandteile möglich.

Zur Erhöhung der Betriebssicherheit und zur Gewährleistung einer Flüssigkeitszufuhr auch bei sehr stark verschmutztem Filtereinsatz, also einem Einsatz, der aufgrund dieser hohen Verschmutzung nicht mehr von der Flüssigkeit durchströmt werden kann, ist in einer weiteren Ausgestaltung der Erfindung zwischen Reinflüssigkeitsseite und Rohflüssigkeitsseite ein Filterumgehungsventil angeordnet. Dieses öffnet bei einem bestimmten Differenzdruck und stellt eine direkte Verbindung zwischen Ein- und Ausgang des Filters her.

Insbesondere bei Verwendung des Flüssigkeitsfilters als Kraftstoffilter ist es wichtig, daß das Filter mit einem Entlüftungssystem ausgestattet ist. In einer vorteilhaften Ausgestaltung der Erfindung ist deshalb vorgesehen, den Rohflüssigkeitsraum oder den Reinflüssigkeitsraum mit einer Entlüftungsbohrung zu versehen. Durch diese Entlüftungsbohrung fließt kontinuierlich Kraftstoff in den Vorratsbehälter zurück. Die zurückfließende Menge ist äußerst gering und daher während des Betriebs unerheblich. Die Entlüftungsbohrung ist jedoch geeignet, in kurzer Zeit das Filter, z. B. nach Austausch des Filterelements oder nach einer vollständigen Entleerung des Kraftstoffsystems wieder mit Kraftstoff zu füllen.

Eine weitere Ausgestaltung der Erfindung sieht vor, ein Bodenablaufventil anzuordnen. Dies ist zweckmäßig, um bei einer Wartung, d. h. einem Austausch des Filterelements sicherzustellen, daß die in dem Gehäuse enthaltene Flüssigkeit abströmen kann. Dieses Bodenablaufventil wird von dem Deckel des Gehäuses betätigt.

Es ist gemäß einer Weiterbildung der Erfindung vorgesehen, ein Heizelement an dem Filter anzuordnen. Dieses ist besonders dann von Vorteil, wenn der zu filternde Kraftstoff eine bestimmte Temperatur nicht unterschreiten darf.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungsbeispiels näher erläutert.

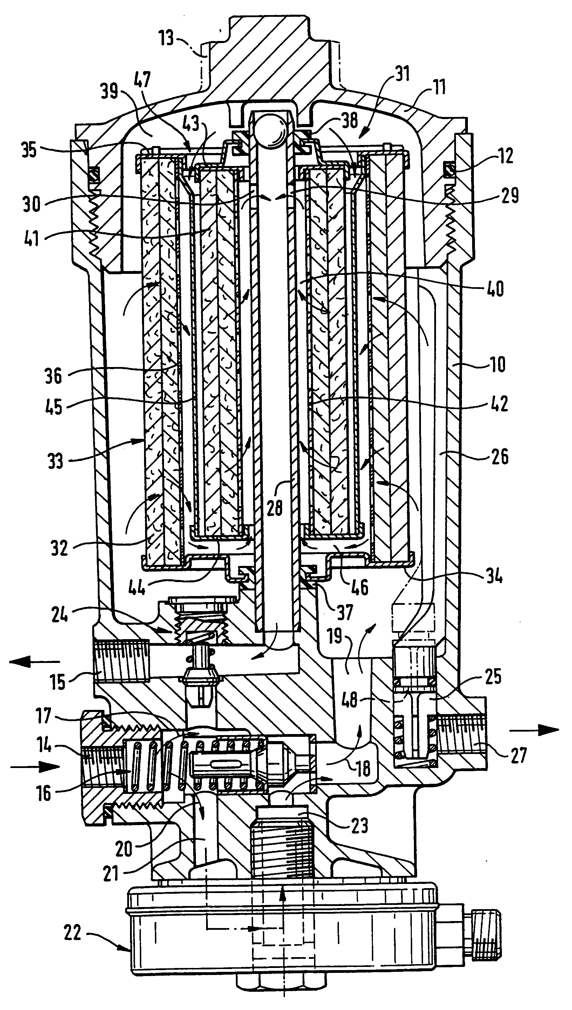

Die Figur zeigt ein Kraftstoffilter bestehend aus einem Filtergehäuse 10, welches an der Oberseite offen und mit einem Deckel 11 verschließbar ist. Der Deckel wird zweckmäßigerweise auf das Filtergehäuse 10 aufgeschraubt. Zur Abdichtung zwischen Deckel und Filtergehäuse ist eine O-Ring-Dichtung 12 vorgesehen. Um den Deckel mittels eines Werkzeugs zu öffnen, ist dieser mit einem zentral angeordneten Sechskant 13 versehen.

Am unteren Teil des Filtergehäuses 10 befindet sich ein Rohflüssigkeitszulauf 14 sowie ein Reinflüssigkeitsablauf 15. Der Rohflüssigkeitszulauf 14 ist mit einem Thermostatventil 16 versehen. Das Thermostatventil 16 steuert in Abhängigkeit von der Temperatur der Rohflüssigkeit den Durchgang der Rohflüssigkeit durch das Filter. Liegt die Temperatur der Rohflüssigkeit über einem bestimmten Grenzwert, dann wird diese unmittelbar gemäß den Pfeilen 17, 18 über die Bohrung 19 dem Filter zugeführt. Liegt die Temperatur der Rohflüssigkeit unterhalb eines bestimmten Grenzwertes, dann gelangt sie gemäß dem Pfeil 20 über eine Bohrung 21 in ein Heizelement 22. Dieses Heizelement 22 ist beispielsweise ein Wärmetauscher oder ein elektrisches Heizelement. Die Rohflüssigkeit wird hier erwärmt und gelangt über die Bohrung 23 zu der Bohrung 19 und weiter in das Filter.

Es ist ferner ein Filterumgehungsventil 24 vorgesehen. Dieses ist zwischen dem Rohflüssigkeitszulauf und dem Reinflüssigkeitsablauf geschaltet. Sobald aus irgendeinem Grund der Durchfluß der Flüssigkeit durch das Filter einen zulässigen Differenzdruck übersteigt, öffnet dieses Ventil und schließt Rohflüssigkeitszulauf 14 und Reinflüssigkeitsablauf 15 kurz.

Weiterhin ist ein Bodenablaufventil 25 vorgesehen. Dieses hat die Aufgabe, bei einem Austausch des Filterelements und damit bei einem Öffnen des Deckels 11 ein Abfließen der in dem Filter befindlichen Flüssigkeit zu gewährleisten. Das Bodenablaufventil 25 ist im Betriebszustand geschlossen. Sobald der Deckel 11 abgeschraubt und damit angehoben wird, bewirkt die Axialbewegung des Deckels ein Anheben des Schiebers 26. Dieser Schieber wirkt auf das Bodenablaufventil 25 derart, daß durch diese Axialbewegung sich dieses Ventil öffnet und einen Ausgang 27 freigibt, durch welchen die in dem Filter befindliche Flüssigkeit in einen Vorratsbehälter oder in den Kraftstofftank abfließen kann. Mit dem Filtergehäuse starr verbunden ist ein Mittelrohr 28, welches teilweise mit Öffnungen 29, 30 versehen ist.

Das austauschbare Filterpaket 31 besteht aus einem ersten Filterelement 32, welches als Filtermedium ein doppellagiges Filzelement 33 aufweist. Dieses ist zwischen zwei Endscheiben 34, 35 befestigt und stützt sich an einem Stützmantel 36 ab. Die Endscheiben weisen in ihrem Zentrum Radialdichtungen 37, 38 auf. Diese Radialdichtungen gewährleisten eine zuverlässige Abdichtung auf dem Mittelrohr 28 und damit eine Abdichtung zwischen dem äußeren Rohflüssigkeitsbereich 39 und dem inneren Reinflüssigkeitsbereich 40.

Es ist weiterhin ein zweites Filterelement 41 vorgesehen. Dieses ist entsprechend dem Filterelement 33 aufgebaut und besitzt ebenfalls einen Stützmantel 42 sowie stirnseitige Abdeckungen 43, 44. Zwischen dem ersten und dem zweiten Filterelement ist eine Trennwand 45 vorgesehen. Die von dem ersten Filterelement 32 gereinigte Flüssigkeit strömt zwischen dem Stützmantel 36 und der Trennwand 45 nach unten durch einen Ringspalt 46 in das Zentrum des Filterpakets und gelangt gemeinsam mit der von dem Filterelement 41 gereinigten Flüssigkeit über die Bohrungen 30, 29 in das Mittelrohr und von dort zu dem Reinflüssigkeitsablauf 15. Der Zulauf der Rohflüssigkeit zu dem zweiten Filterelement 41 erfolgt über Öffnungen 47, die in der Endscheibe 35 angeordnet sind. Es ist aus dieser Figur ersichtlich, daß beide Filterelemente von außen nach innen durchströmt werden.

Es ist ferner aus der Figur ersichtlich, daß der zur Verfügung stehenden Raum optimal für eine möglichst große Filterfläche ausgenutzt ist, so daß das Filter eine hohe Effizienz aufweist.

Zum Austausch des Filterpakets 31 wird wie bereits erwähnt der Deckel 11 abgeschraubt. Das Filterpaket 31 kann herausgezogen werden und wird entweder in seine Einzelteile zerlegt und lediglich die Filzelement erneuert oder komplett ersetzt.

### Bezugszeichenliste

- 10: Filtergehäuse
- 11: Deckel
- 12: O-Ringdichtung
- 13: Sechskant
- 14: Rohflüssigkeitszulauf
- 15: Reinflüssigkeitsablauf
- 16: Thermostatventil
- 17: Pfeil
- 18: Pfeil
- 19: Bohrung
- 20: Pfeil
- 21: Bohrung
- 22: Heizelement
- 23: Bohrung
- 24: Filterumgehungsventil
- 25: Bodenablaufventil
- 26: Schieber
- 27: Ausgang
- 28: Mittelrohr
- 29: Öffnung
- 30: Öffnung
- 31: Filterpaket
- 32: Filterelement
- 33: Filzelement
- 34: Endscheibe
- 35: Endscheibe
- 36: Stützmantel
- 37: Radialdichtung
- 38: Radialdichtung
- 39: Rohflüssigkeitsbereich
- 40: Reinflüssigkeitsbereich
- 41: Filterelement
- 42: Stützmantel
- 43: Abdeckung
- 44: Adeckung
- 45: Trennwand
- 46: Ringspalt
- 47: Öffnungen
- 48: Entlüftungsöffnung

## Patentansprüche

1. Flüssigkeitsfilter mit einem öffenbaren Filtergehäuse, einem Rohflüssigkeitszulauf (14), einem Reinflüssigkeitsablauf (15), einem in dem Filtergehäuse angeordneten Filterelement (32), welches im wesentlichen hohlzylinderförmig ausgestaltet ist und von außen nach innen durchströmt ist, wobei ein weiteres, ebenfalls hohlzylinderförmiges Filterelement (41) vorgesehen ist, dadurch gekennzeichnet, daß dieses weitere Filterelement innerhalb des ersten Filterelements (32) angeordnet ist und ebenfalls von außen nach innen durchströmt ist und wobei zwischen den beiden Filterelementen eine Trennwand (45) angeordnet ist, wobei das zweite Filterelement (41) einen Umgehungskanal (46) aufweist, durch welchen die von dem ersten Filterelement (32) gereinigte Flüssigkeit strömt und wobei ein die Reinflüssigkeit sammelndes Mittelrohr (28) vorgesehen ist, welchem die gereinigte Flüssigkeit von dem ersten und von dem weiteren Filterelement (41) zuführbar ist, und wobei die beiden Filterelemente (32, 41) eine Einheit bilden und mit stirnseitigen Endscheiben (34, 35) versehen sind, wobei jede Endscheibe eine Mittelbohrung mit einer Radialdichtung (37, 38) aufweist und die Radialdichtung (37, 38) an dem Mittelrohr (28) anliegt zur Abdichtung zwischen Rohflüssigkeits- (39) und Reinflüssigkeitsraum (40).

2. Flüssigkeitsfilter nach Anspruch 1, dadurch gekennzeichnet, daß das zweite Filterelement (41) einen Umgehungskanal (46) aufweist, durch welche die von dem ersten Filterelement (32) gereinigte Flüssigkeit strömt und wobei ein die Reinflüssigkeit sammelndes Mittelrohr (28) vorgesehen ist, welchem die gereinigte Flüssigkeit von dem ersten und von dem weiteren Filterelement (41) zuführbar ist.

3. Flüssigkeitsfilter nach Anspruch 1 oder 2, dadurch gekennzeichnet, daß die beiden Filterelemente (32, 41) eine Einheit bilden und mit stirnseitigen Endscheiben (34, 35) versehen sind, wobei jede Endscheibe eine Mittelbohrung mit einer Radialdichtung (37, 38) aufweist und die Radialdichtung (37, 38) an dem Mittelrohr (28) anliegt zur Abdichtung zwischen Rohflüssigkeits- (39) und Reinflüssigkeitsraum (40).

4. Flüssigkeitsfilter nach einem der vorherigen Ansprüche, dadurch gekennzeichnet, daß die Filterelemente (32, 41) aus einem Filtermittel (33) und Endscheiben (34, 35), sowie einer Trennwand (45) bestehen, wobei die Endscheiben (34, 35) und die Trennwand (45) mit den Filtermitteln (33) lösbar verbunden sind.

5. Flüssigkeitsfilter nach einem der vorherigen Ansprüche, dadurch gekennzeichnet, daß zwischen Reinflüssigkeitsablauf (15) und Rohflüssigkeitseinlauf (14) ein Filterumgehungsventil (24) vorgesehen ist.

6. Flüssigkeitsfilter nach einem der vorherigen Ansprüche, dadurch gekennzeichnet, daß der Rohflüssigkeitsraum (39) und/oder der Reinflüssigkeitsraum (40) mit einer Entlüftungs Öffnung (48) versehen ist und die Entlüftungsöffnung (48) mit einem Vorratsbehälter in Verbindung steht.

7. Flüssigkeitsfilter nach einem der vorherigen Ansprüche, dadurch gekennzeichnet, daß ein Bodenablaufventil ( 25) vorgesehen ist, welches von dem das Gehäuse (10) verschließenden Deckel (11) betätigbar ist.

8. Flüssigkeitsfilter nach einem der vorherigen Ansprüche, dadurch gekennzeichnet, daß ein Heizelement (22) vorgesehen ist, zum Erwärmen der durch das Filter strömenden Flüssigkeit.

## Claims

1. Liquid filter, having an openable filter housing, an unfiltered liquid inlet (14), a filtered liquid outlet (15), a filter element (32) which is disposed in the filter housing, said element having a substantially hollow-cylindrical configuration and being traversed inwardly from the outside, and an additional, similar hollow-cylindrical filter element (41) being provided, characterised in that this additional filter element is disposed internally of the first filter element (32) and is similarly traversed inwardly from the outside, and a dividing wall (45) being disposed between the two filter elements, the second filter element (41) having a bypass duct (46), through which the liquid which has been filtered by the first filter element (32) flows, and a central tube (28) being provided, which collects the filtered liquid, and to which tube the filtered liquid is suppliable from the first filter element (32) and from the additional filter element (41); and the two filter elements (32, 41) form a unit and are provided on their end faces with end plates (34, 35), each end plate having a central bore provided with a radial seal (37, 38), and the radial seal (37, 38) abutting against the central tube (28) to seal between unfiltered liquid chamber (39) and filtered liquid chamber (40).

2. Liquid filter according to claim 1, characterised in that the second filter element (41) has a bypass duct (46), through which the liquid which has been filtered by the first filter element (32) flows, and a central tube (28) being provided, which collects the filtered liquid, and to which tube the filtered liquid is suppliable from the first filter element (32) and from the additional filter element (41).

3. Liquid filter according to claim 1 or 2, characterised in that the two filter elements (32, 41) form a unit and are provided on their end faces with end plates (34, 35), each end plate having a central bore provided with a radial seal (37, 38), and the radial seal (37, 38) abutting against the central tube (28) to seal between unfiltered liquid chamber (39) and filtered liquid chamber (40).

4. Liquid filter according to one of the preceding claims, characterised in that the filter elements (32, 41) comprise a filter means (33) and end plates (34, 35), as well as a dividing wall (45), the end plates (34, 35) and the dividing wall (45) being detachably connected to the filter means (33).

5. Liquid filter according to one of the preceding claims, characterised in that a filter bypass valve (24) is provided between filtered liquid outlet (15) and unfiltered liquid inlet (14).

6. Liquid filter according to one of the preceding claims, characterised in that the unfiltered liquid chamber (39) and/or the filtered liquid chamber (40) are/is provided with an aeration aperture (48), and the aeration aperture (48) communicates with a supply vessel.

7. Liquid filter according to one of the preceding claims, characterised in that a bottom outlet valve (25) is provided, which is actuatable by the cover (11) sealing the housing (10).

8. Liquid filter according to one of the preceding claims, characterised in that a heating member (22) is provided to heat the liquid flowing through the filter.

## Revendications

1. Filtre pour liquides comportant un boîtier ouvrable, une amenée (14) de liquide brut, une sortie (15) de liquide épuré, un élément filtrant (32) logé dans le boîtier de filtre et ayant essentiellement la forme d'un cylindre creux traversé de l'extérieur vers l'intérieur, un autre élément filtrant (41), également cylindrique creux étant prévu,
caractérisé en ce que
- le second élément filtrant est monté à l'intérieur du premier élément (32) et traversé également de l'extérieur vers l'intérieur, une cloison séparatrice (45) étant intercalée entre les deux éléments filtrants,
- le second élément filtrant (41) présente un canal de dérivation (46) dans lequel s'écoule le liquide épuré sortant du premier élément filtrant (32),
- il est prévu un tube central (28) collectant le liquide épuré provenant du premier et du second élément filtrant, ces deux éléments (32, 41) formant un ensemble équipé de disques frontaux d'extrémité (34, 35) dont chacun est percé d'un alésage central portant un joint d'étanchéité radiale (37, 38) appliqué sur le tube central (28) de manière à séparer de manière étanche la chambre de liquide brut (39) et la chambre de liquide épuré (40).

2. Filtre pour liquides selon la revendication 1,
caractérisé en ce que
le second élément filtrant (41) comporte un canal de dérivation (46) dans lequel s'écoule le liquide épuré sortant du premier élément filtrant (28) et qu'il est prévu un tube central (28) collectant le liquide épuré provenant du premier et du second élément filtrant (41).

3. Filtre selon la revendication 1 ou 2,
caractérisé en ce que
les deux éléments filtrants (32, 41) forment un ensemble équipé de disques frontaux d'extrémité (34, 35) dont chacun est percé d'un alésage central portant un joint d'étanchéité radiale (37, 38) appliqué sur le tube central (28) de manière à séparer de manière étanche la chambre de liquide brut (39) et la chambre de liquide épuré (40).

4. Filtre selon une des revendications précédentes,
caractérisé en ce que
les éléments filtrants (32, 41) sont constitués d'un milieu filtrant (33) et de disques d'extrémité (34, 35) ainsi que d'une cloison séparatrice (45) qui, comme les disques (34, 35) est reliée de manière séparable au média filtrant.

5. Filtre selon une des revendications précédentes,
caractérisé en ce qu'
il est prévu une soupape de dérivation (24) entre la sortie (15) de liquide épuré et l'amenée (14) de liquide brut.

6. Filtre selon une des revendications précédentes,
caractérisé en ce que
la chambre de liquide brut (39) et/ou la chambre de liquide épuré (40) est équipée d'un orifice de ventilation (48) relié à un réservoir d'alimentation.

7. Filtre selon une des revendications précédentes,
caractérisé en ce qu'
il comporte une soupape de sortie (25) logée dans sa base et pouvant être actionnée depuis le couvercle (11) obturant le boitier (10).

8. Filtre selon une des revendications précédentes,
caractérisé en ce qu'
il comporte un élément chauffant (22) pour réchauffer le liquide traversant le filtre.
